# EUROPÄISCHE PATENTSCHRIFT

(11) **EP 2 810 863 B1**
(45) Veröffentlichungstag und Bekanntmachung des Hinweises auf die Patenterteilung: **09.11.2016**
(21) Anmeldenummer: 14171084.8
(22) Anmeldetag: 04.06.2014
(51) Int. Cl.: B62K 25/28

(54) **Fahrradrahmen mit einem Sitzstreben und Kettenstreben aufweisenden Hinterbau zum Aufnehmen eines Hinterrades**
Bicycle frame with a seat stays and a rear structure with chain stays for mounting a rear wheel
Cadre de vélo équipé d'une structure arrière présentant un hauban et une base pour la réception d'une roue arrière

(30) Priorität: 04.06.2013 DE 202013005061 U
(43) Veröffentlichungstag der Anmeldung: 10.12.2014
(73) Patentinhaber: Derby Cycle Werke GmbH, 49661 Cloppenburg (DE)
(72) Erfinder: Scholz, Fabian, 70178 Stuttgart (DE)
(74) Vertreter: Jabbusch, Matthias

(56) Entgegenhaltungen:
- DE-A1-102010 010 662
- DE-U1- 20 209 190
- FR-A1- 2 949 105
- US-A1- 2010 102 531

## Beschreibung

Die Erfindung betrifft einen Fahrradrahmen mit einem Sitzstreben und Kettenstreben aufweisenden Hinterbau zum Aufnehmen eines Hinterrades, wobei die Kettenstreben im Bereich des Tretlagers an Rahmenabschnitten schwenkbar angelenkt sind und den Sitzstreben zumindest ein Federelement zugeordnet ist.

Fahrradrahmen werden in ungefederter bzw. in zumindest teilweise gefederter Bauart hergestellt. Bei gefederten Fahrradrahmen haben sich Vorderradgabeln mit einer Federung weitgehend durchgesetzt, in vollständig gefederten Fahrrädern wird auch das im Hinterbau aufgenommene Hinterrad mit einer Federung versehen.

Aus der FR2949105 ist ein Fahrradrahmen mit den Merkmalen des Oberbegriffes des Anspruchs 1 bekannt.

Um ein Hinterrad federnd aufzunehmen, können Kettenstreben am Fahrradrahmen schwenkbar angelenkt sein, sie sind dann um diesen Schwenkpunkt nach oben bzw. unten verschwenkbar. Sitzstreben sind dann nicht fest am Sattelrohr angeschlagen, ihnen ist ein Federelement zugeordnet. Dieses Federelement ist dann mit dem Fahrradrahmen verbunden.

Der Erfindung liegt die Aufgabe zugrunde, einen Fahrradrahmen der eingangs genannten Gattung aufzuzeigen, der eine gefederte, jedoch spurstabile und sichere Aufnahme des Hinterrades ermöglicht.

Diese Aufgabe ist erfindungsgemäß dadurch gelöst, dass die Sitzstreben an einem Lenkabschnitt angelenkt sind, der über ein Drehgelenk mit einem

Hebelstück verbunden ist, wobei das Hebelstück an einem Rahmenabschnitt angelenkt ist und sich auf dem Federelement abstützt.

Bei dem erfindungsgemäßen Verfahren sind die Sitzstreben nicht direkt an dem Federelement abgestützt. Zum Abstützen dienen vielmehr Lenkabschnitt und Hebelstück, wobei die Sitzstreben direkt an einem Lenkabschnitt schwenkbar angelenkt sind. Dieser Lenkabschnitt wirkt ein auf ein Hebelstück, das ist wiederum am Rahmenabschnitt, beispielsweise am Sattelrohr, schwenkbar angelenkt und stützt sich auf das Federelement ab. Ein Einfedern bzw. Ausfedern der Sitzstreben wird also über den Lenkabschnitt zunächst auf das Hebelstück übertragen, von dort erfolgt dann der Übertrag auf Rahmenabschnitt und Federelement. Mit dem Federelement werden somit indirekt Stöße auf das Hinterrad über die Sitzstreben abgefedert und ggf. gedämmt.

Das Anlenken des Hebelstücks am Rahmen erfolgt in einer Ebene unterhalb der Ebene des Abstützens des Hebelstücks auf dem Federelement. Bei einem Einfedern des Hinterrades kann sich das Hebelstück auf das Federelement abstützen. Das Federelement kann dabei seine Erstreckung verringern, dadurch kippt das am Rahmenabschnitt schwenkbar abgestützte Hebelstück nach vorne. Das Anlenken des Lenkabschnitts am Hebelstück erfolgt dann in einer Ebene oberhalb der Ebene des Anlenkens des Hebelstücks am Federelement. Von den Sitzstreben eingebrachte Kräfte werden über den Lenkabschnitt auf das Hebelstück übertragen, dies oberhalb der Ebene des Anlenkens des Hebelstücks am Federelement. Dadurch kann von oben auf das Federelement eingewirkt werden, dieses kann seine Erstreckung verkürzen bzw. beim Ausfedern seine Erstreckung wieder verlängern.

Nach einer nächsten Weiterbildung der Erfindung ist vorgesehen, dass das Hebelstück etwa bumerangförmig mit zwei Hebelarmen ausgebildet ist, wobei ein Hebelarm am Rahmenabschnitt schwenkbar angelenkt ist und der andere Hebelarm am Federelement schwenkbar angelenkt ist. Das Hebelstück hat insoweit eine gebogene Bauform mit zwei freien Enden. Die freien Enden sind den zwei Hebelarmen zugeordnet, vorzugsweise über diese freien Enden ist das Hebelstück am Rahmenabschnitt schwenkbar angelenkt und an dem Federelement schwenkbar angelenkt und zugleich auf diesem abgestützt. Der Lenkabschnitt ist vorzugsweise in einem Bereich zwischen den Hebelarmen des Hebelstücks an diesem angelenkt, so dass Kräfte von den Sitzstreben über den Lenkabschnitt in die Mitte des Hebelstückes eingetragen werden. Sie werden dann über den einen Hebelarm auf den Fahrradrahmen abgelenkt, über den anderen Hebelarm erfolgt ein Ablenken dieser Kräfte auf das Federelement. Dessen Einfedern ermöglicht ein Verschwenken des Hebelstückes am Rahmenabschnitt des Fahrrades, daraufhin können Lenkabschnitt und obere Kettenstreben einen Weg zurücklegen. Das Hinterrad federt ein.

Ein Ausführungsbeispiel der Erfindung, aus dem sich weitere erfinderische Merkmale ergeben, ist in der Zeichnung dargestellt. Es zeigen:
- Figur 1:: eine Teil-Seitenansicht eines Fahrradrahmens,
- Figur 2:: eine Teil-Seitenansicht des Fahrradrahmens nach Figur 1 nach Wegnahme einiger Bauteile und
- Figuren 3 a/b:: Teil-Seitenansichten des Fahrradrahmens gemäß Figur 1 mit verschieden weit eingefedertem Hinterrad.

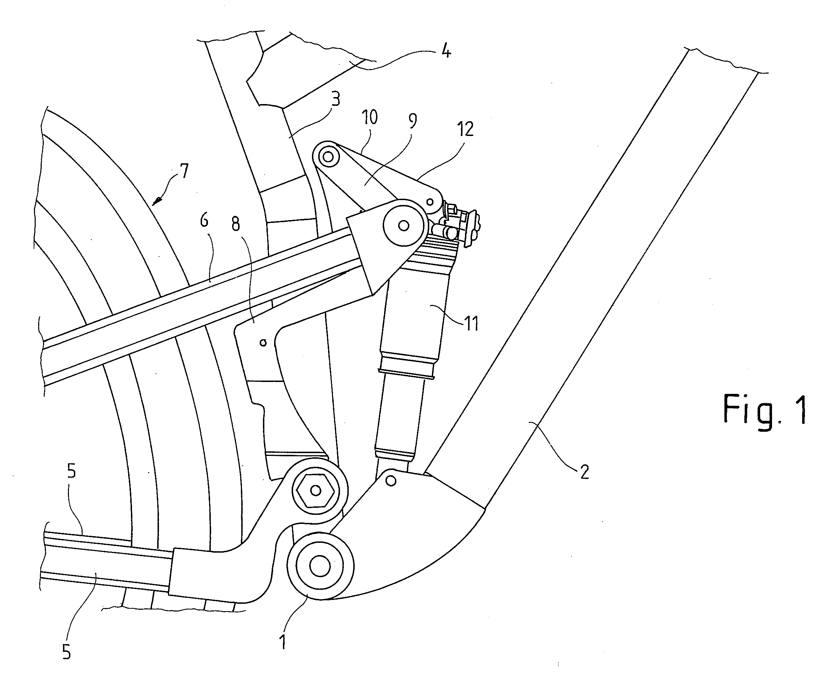

Der Fahrradrahmen in Figur 1 weist ein Tretlager 1, ein Unterrohr 2, ein Sattelrohr 3 sowie ein Oberrohr 4 auf. Im Bereich des Tretlagers 1 sind an dem Sattelrohr 3 Kettenstreben 5 schwenkbar angelenkt. Die Kettenstreben 5 tragen zusammen mit Sitzstreben 6 ein Hinterrad 7. Beide Streben 5, 6 sind noch über ein Linkprofil 8 miteinander verbunden.

Die Sitzstreben 6 sind an einem Lenkabschnitt 9 schwenkbar angelenkt. Der Lenkabschnitt 9 ist in Figur 1 ein Flachprofilstück, dieser Lenkabschnitt 9 ist seinerseits schwenkbar angelenkt an einem Hebelstück 10. Das Hebelstück 10 stützt sich auf ein Federelement 11 ab, dazu ist es schwenkbar an dem Federelement 11 angelenkt.

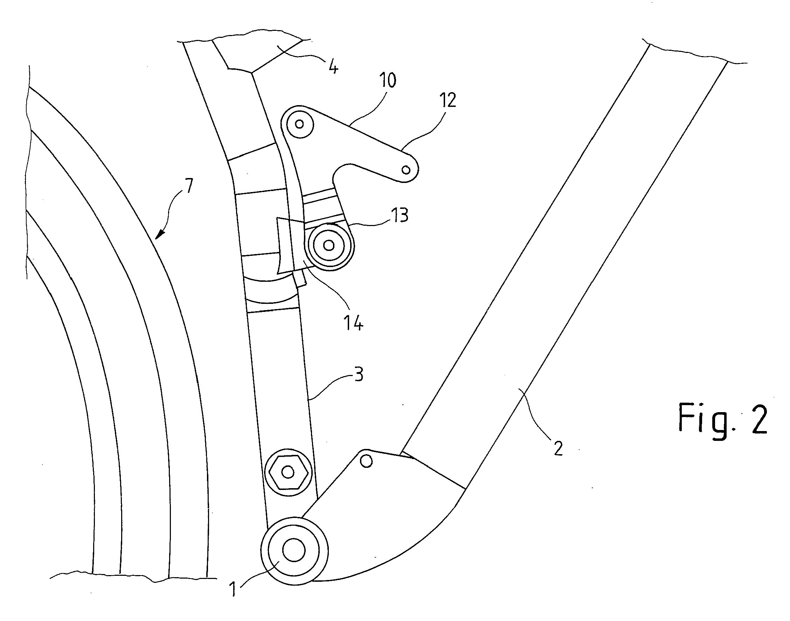

Figur 2 zeigt, dass das Hebelstück 10 eine Bumerangform hat, es weist zwei Hebelarme 12, 13 auf. Der Hebelarm 12 ist am Federelement 11 schwenkbar angelenkt, wie in Figur 1 gezeigt. Figur 2 zeigt, dass der zweite Hebelarm 13 schwenkbar über einen Vorsprung 14 am Sattelrohr 3 angelenkt ist.

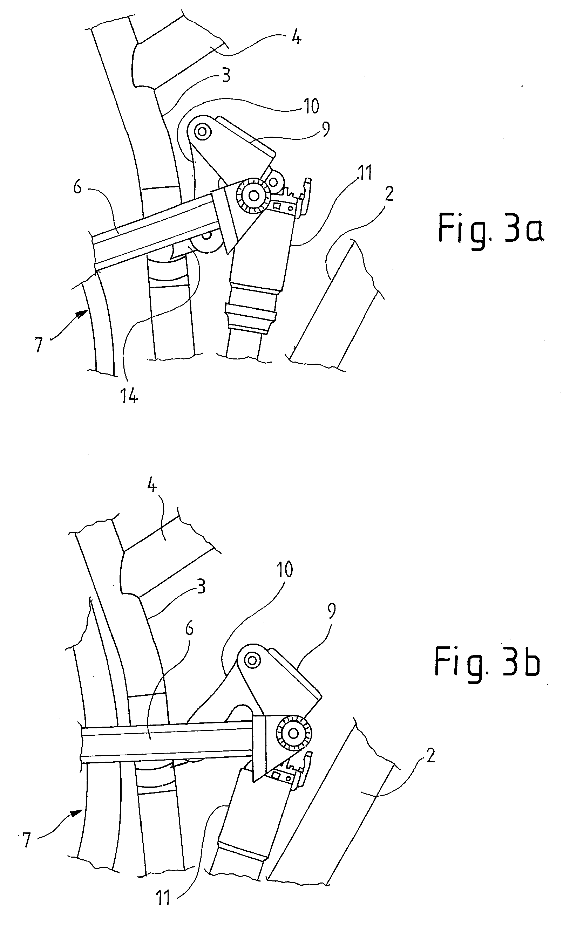

In Figuren 3 a und 3 b sind die Sitzstreben 6 wieder dargestellt, das Linkprofil 8 ist weggelassen. Die ausgefederte Darstellung in Figur 3 a zeigt, dass das Hinterrad 7 einen Abstand zum Sattelrohr 3 einhält. Der Anlenkpunkt der Sitzstreben 6 am Lenkabschnitt 9 erfolgt in einer Ebene oberhalb der Ebene der Anlenkung des Hebelstückes 10 am Sattelrohr 3. Die Anlenkung des Lenkabschnittes 9 am Hebelstück 10 erfolgt wiederum in einer Ebene oberhalb der Ebene der Anlenkung des Hebelstückes 10 am Federelement 11.

Figur 3b zeigt das eingefederte Hinterrad 7 sowie die nach vorn in Richtung Vorderrad bewegten Sitzstreben 6. Das Federelement 11 ist verkürzt, Hebelstück 10 und Lenkabschnitt 9 haben sich nach vorn bewegt und zu diesem Verkürzen des Federelementes 11 geführt.

Alle in der vorstehenden Beschreibung und in den Ansprüchen genannten Merkmale sind in einer beliebigen Auswahl mit den Merkmalen des unabhängigen Anspruchs kombinierbar. Die Offenbarung der Erfindung ist somit nicht auf die beschriebenen bzw. beanspruchten Merkmalskombinationen beschränkt, vielmehr sind alle im Rahmen der Erfindung sinnvollen Merkmalskombinationen als offenbart zu betrachten.

## Patentansprüche

1. Fahrrahmen mit einem Sitzstreben (6) und Kettenstreben (5) aufweisenden Hinterbau zum Aufnehmen eines Hinterrades, (7) wobei die Kettenstreben im Bereich des Tretlagers (1) an Rahmenabschnitten schwenkbar angelenkt sind, den Sitzstreben zumindest ein Federelement (11) zugeordnet ist, die Sitzstreben (6) an einem Lenkabschnitt (9) angelenkt sind, der über ein Drehgelenk mit einem Hebelstück (10) verbunden ist und das Hebelstück (10) an einem Rahmenabschnitt angelenkt ist und sich auf dem Federelement (11) abstützt, wobei das Anlenken des Hebelstücks (10) am Rahmen in einer Ebene unterhalb der Ebene des Abstützens des Hebelstücks (10) auf dem Federelement (11) vorgenommen ist **dadurch gekennzeichnet, dass** das Anlenken des Lenkabschnitts (9) am Hebelstück (10) in einer Ebene oberhalb der Ebene des Anlenkens des Hebelstücks (10) am Federelement (11) vorgenommen ist.

2. Fahrradrahmen nach Anspruch 1, **dadurch gekennzeichnet, dass** das Hebelstück (10) etwa bumerangförmig mit zwei Hebelarmen (12, 13) ausgebildet ist, wobei ein Hebelarm (13) am Rahmenabschnitt schwenkbar angelenkt ist und der andere Hebelarm (12) am Federelement (11) schwenkbar angelenkt ist.

3. Fahrradrahmen nach Anspruch 2, **dadurch gekennzeichnet, dass** der Lenkabschnitt (9) in einem Bereich zwischen den Hebelarmen (12, 13) des Hebelstücks (11) an diesem angelenkt ist.

## Claims

1. A bicycle frame with a rear structure featuring seat stays (6) and chain stays (5) for mounting a rear wheel (7), wherein the chain stays are pivotably coupled to frame sections in the region of the bottom bracket (1), wherein at least one spring element (11) is assigned to the seat stays, wherein the seat stays (6) are coupled to a steering section (9), which is connected to a lever piece (10) by means of a pivot joint, and the lever piece (10) is coupled to a frame section and supported on the spring element (11), and wherein the lever piece (10) is coupled to the frame in a plane that lies underneath the plane, in which the lever piece (10) is supported on the spring element (11),
**characterized in that**
the steering section (9) is coupled to the lever piece (10) in a plane that lies above the plane, in which the lever piece (10) is coupled to the spring element (11).

2. The bicycle frame according to claim 1, **characterized in that** the lever piece (10) is realized in an approximately boomerang-shaped fashion with two lever arms (12, 13), wherein one lever arm (13) is pivotably coupled to the frame section and the other lever arm (12) is pivotably coupled to the spring element (11).

3. The bicycle frame according to claim 2, **characterized in that** the steering section (9) is coupled to the lever piece (10) in a region between its lever arms (12, 13).

## Revendications

1. Cadre mobile avec une structure arrière présentant des haubans (6) et des bases (5), pour la réception d'une roue arrière (7), dans lequel les bases sont articulées de façon pivotante sur des sections de cadre dans la région du pédalier (1), au moins un élément de ressort (11) est attribué aux haubans, les haubans (6) sont articulés sur une section de direction (9), laquelle est reliée à une pièce de levier (10) par le biais d'une articulation rotative, et la pièce de levier (10) est articulée sur une section de cadre et s'appuie sur l'élément de ressort (11),
dans lequel l'articulation de la pièce de levier (10) sur le cadre est réalisée sur l'élément de ressort (11), dans un plan situé en dessous du plan de l'appui de la pièce de levier (10),
**caractérisé en ce que**
l'articulation de la section de direction (9) sur la pièce de levier (10) est réalisée sur l'élément de ressort (11), dans un plan situé au-dessus du plan de l'articulation de la pièce de levier (10).

2. Cadre de bicyclette selon la revendication 1, **caractérisé en ce que** la pièce de levier (10) est conçue approximativement en forme de boomerang, avec deux bras de levier (12, 13), un bras de levier (13) étant articulé de façon pivotante sur la section de cadre et l'autre bras de levier (12) étant articulé de façon pivotante sur l'élément de ressort (11).

3. Cadre de bicyclette selon la revendication 2, **caractérisé en ce que** la section de direction (9) est articulée sur la pièce de levier (10), dans une région située entre les bras de levier (12, 13) de celle-ci.
